(19) Europäisches Patentamt

**European Patent Office**

**Office européen des brevets**

(11) Veröffentlichungsnummer: **0 197 167
B1**

(12) **EUROPÄISCHE PATENTSCHRIFT**

(45) Veröffentlichungstag der Patentschrift:
**26.10.88**

(21) Anmeldenummer: **85104105.3**

(22) Anmeldetag: **04.04.85**

(51) Int. Cl.⁴: **A 47 C 3/00,** A 47 C 11/00,
B 60 N 1/00, B 61 D 33/00,
B 64 D 11/00

(54) **Doppel-Fahrgastsitz.**

(43) Veröffentlichungstag der Anmeldung:
**15.10.86 Patentblatt 86/42**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**DE - A - 3 147 045
FR - A - 1 094 636
FR - A - 2 442 157
US - A - 2 674 300
US - A - 3 625 565
US - A - 3 870 363**

(73) Patentinhaber: **Ignaz Vogel GmbH & Co KG,
Fahrzeugsitze, Kleinsteinbacher Strasse 42-44,
D-7500 Karlsruhe 41-Stu (DE)**

(72) Erfinder: **Vogel, Ignaz, Dipl.-Ing., Kleinsteinbacher
Strasse 44, D-7500 Karlsruhe 41-Stu (DE)**

(74) Vertreter: **Trappenberg, Hans, Postfach 1909,
D-7500 Karlsruhe 1 (DE)**

**Beschreibung**

Die Erfindung betrifft einen Doppel-Fahrgastsitz zum Einsatz in Land-, See- und Luftfahrzeugen, gebildet aus einem Sitzrahmen, auf das Sitzpolster aufbringbar sind und an dem aus einem Rahmenviereck mit Polsterauflage bestehende Rükkenteile jeweils verschwenkbar angelenkt sind, sowie aus einem den Sitz tragenden Untergestell.

Der Gebrauchswert eines Fahrgastsitzes wird von vielen unterschiedlichen und manchmal auch gegensätzlichen Faktoren beeinflusst. So sollen Fahrgastsitze eine solche Festigkeit aufweisen, dass sie in der Lage sind, bei einem Unfall die Passagiere zu schützen, also insbesondere die Aufprallenergie von Personen, die auf die Fahrgastsitze aufprallen, aufzunehmen und zu absorbieren. Um eine solche Festigkeit zu erreichen, wurde bisher so vorgegangen, dass verhältnismässig schwere Konstruktionen eingesetzt wurden. Das hohe Gewicht dieser Konstruktionen, das jedoch stets Totgewicht bedeutet, stand dem wirtschaftlichen Einsatz derartiger Fahrgastsitze entgegen. Um Unfallfolgen zu mindern, müssen derartige Fahrgastsitze auch splittersicher aufgebaut sein, keine Kanten, die zu Verletzungen führen könnten, aufweisen, und sie dürfen auch die schnelle Evakuierung eines Fahrzeuges nicht behindern. Neben diesen Forderungen sollen die Fahrgastsitze zudem eine grosse Standzeit aufweisen, die, gegebenenfalls unter Auswechslung von Verschleissteilen, mit derjenigen des Fahrzeugs übereinstimmen soll. Eine besondere Forderung geht auch dahin, dass sowohl besetzte wie auch unbesetzte Fahrgastsitze klapperfrei sein müssen. Ausserdem sollen sowohl die Fahrgastsitze, wie auch die Umgebung der Fahrgastsitze, leicht zu säubern sein. Schliesslich sollen die Fahrgastsitze auch noch formschön sein und einen hohen Komfort bieten. All dies soll zudem auf wirtschaftliche Art und Weise realisierbar sein.

Den Angelpunkt bei der Erfüllung dieser Forderungen spielt jedoch stets das Gewicht dieser Fahrgastsitze. Damit ist die Grundvoraussetzung für den Aufbau der Sitze eine Konstruktion, die bei niedrigem Gewicht in der Lage ist, den Festigkeitsanforderungen zu genügen, wie auch den weiteren oben festgestellten Bedingungen. Erreicht wird dies nach der Erfindung dadurch, dass der Sitzrahmen ein aus hochkant gestellten Rechteckrohren zusammengefügtes Rahmenrechteck ist, das mit mindestens einem mittigen Querrohr versteift ist, dass an dem in Sitzrichtung hinteren Rahmenrohr in einem Winkel von etwa 045° nach oben weisende Gelenkträger, an denen die Rükkenteile angelenkt sind, angebracht sind, die über einen Versteifungsstab fest miteinander verbunden sind und dass jeweils in das Rahmenviereck das Rückenteils im Endbereich der Gelenkträger ein Versteifungsrohr eingefügt ist.

Mit einer derartigen Konstruktion wird die bekannte Standardausführung derartiger Fahrgastsitze verlassen, die die Steifigkeit beziehungsweise Festigkeit durch schwerdimensionierte Stahlrohre herbeizuführen versucht. Die Steifigkeit der Gesamtanordnung wird bei der Erfindung vielmehr dadurch erreicht, dass durch das hintere Rahmenrohr des Rahmenrechtecks sowie durch die die Gelenkträger verbindenden Versteifungsstäbe, wie auch durch die in die Rahmenviereck eingefügten Versteifungsrohre ein Tragholm geschaffen wird, der in der Lage ist, nicht nur die gesamte Konstruktion zu tragen, sondern auch hohe Kräfte bei einem Unfall aufzunehmen und zu absorbieren. Der Tragholm übernimmt hierbei nicht nur parallel zum Rahmenrechteck angreifende Kräfte, sondern auch Kräfte, die senkrecht hierzu auf den Fahrgastsitz einwirken, übernimmt also Kräfte, die beispielsweise durch auf den Fahrgastsitz aufprallende Passagiere auftreten, wie auch Kräfte, die durch grosse Lasten im Verein mit starken Schwingungen auftreten können. Dadurch ist es nicht nur möglich, den Fahrgastsitz verhältnismässig leicht aus den beschriebenen Konstruktionsteilen aufzubauen, sondern auch als Untergestell lediglich eine mittige Untergestellstütze vorzusehen. Die sonst notwendige Unterstützung an den seitlichen Rahmenteilen des Fahrgastsitzes kann damit entfallen, was insbesondere zum Säubern des Bodens unterhalb der Fahrgastsitze einen grossen wirtschaftlichen Vorteil bringt.

Die grundlegenden Konstruktionsteile für den «Tragholm» sind das hintere Rahmenrohr des Rahmenrechteckes, zusammen mit den Gelenkträgern und den diese Gelenkträger verbindenden Versteifungsstäben. Die Versteifungsrohre innerhalb der Rahmenviereck der Rückenteile übernehmen lediglich zusätzliche Festigkeitsaufgaben, wobei diese Versteifungsrohre, etwa bis zur Länge der Gelenkträger, ober- und/oder unterhalb in das Rahmenviereck eingefügt sein können. Zur weiteren Versteifung, insbesondere um eine grössere Torsionssteifigkeit zu bewirken, empfiehlt es sich, dass die inneren Gelenkträger sowohl über einen Brückensteg, wie auch über einen, zum Einschrauben der Gelenkbolzen bestimmten Bolzensteg, starr miteinander verbunden sind.

Um den notwendigen Abstand zum Herstellen des Tragholmes von den Versteifungsstäben zu den Versteifungsrohren zu erreichen, sollen nach der Erfindung die Rückenteile über in Sitzrichtung nach vorne weisende Gelenkstücke an den Gelenkträgern angelenkt werden. Hierbei können die Gelenkstücke auch zur Versteifung des Rahmenvierecks dienen, indem sie bis zu den Versteifungsrohren im Rahmenviereck reichen.

Die Rahmenviereck werden nach der Erfindung ebenfalls aus Rechteckrohren gebildet, die in Sitzrichtung hochkant angeordnet sein sollen. Diese Anordnung folgt aus der Erwägung, dass im Falle eines Unfalls die parallel zur Sitzfläche angreifenden Kräfte deutlich grösser sind als Kräfte quer hierzu.

Zur weiteren Versteifung, wie auch zur Vermeidung der Verletzungsgefahr, wird nach der Erfindung vorgeschlagen, dass die Rückseite des Rükkenteils durch eine ausgebauchte und mit Versteifungssicken versehene, das Rahmenviereck umfassende Kunststoffschale abgedeckt ist. Diese Kunststoffschale kann auch oberseitig das Rahmenviereck überragen und somit eine Tragkonstruktion für ein oberhalb des Rückenteils aufgebautes Kopfteil bilden.

Für den wirtschaftlichen Einsatz des erfindungsgemässen Fahrgastsitzes hat sich dessen symmetrischer Aufbau bewährt. Nicht nur, dass nur ein einzelner mittiger Unterstützungsträger vorgesehen werden muss, sondern es können auch an beiden Seiten Armlehnen vorgesehen werden, die zweckmässigerweise das Widerlager für die äusseren Gelenkbolzen bilden.

So können derartige Fahrgastsitze sowohl rechts, wie auch links an einer Fahrzeugwand befestigt werden. Dies ergibt, zusammen mit dem nur einen einzigen Unterstützungsträger, eine sehr einfache Montier- und Demontierbarkeit.

Hervorzuheben ist schliesslich auch noch die einfache Herstellbarkeit dieses Fahrgastsitzes nach der Erfindung. Die gesamte Konstruktion besteht in ihren wesentlichen Teilen lediglich aus Vierkantrohr-Abschnitten, die auf Automaten zusammengefügt werden können. Aufwendige Biegeeinrichtungen und Biegevorgänge sind zum Herstellen des Fahrgastsitzes nicht notwendig. Insgesamt wird damit dieser Fahrgastsitz nach der Erfindung äusserst preiswert.

Auf der Zeichnung ist ein Ausführungsbeispiel dieses erfindungsgemässen Fahrgastsitzes schematisch dargestellt, und zwar zeigen:

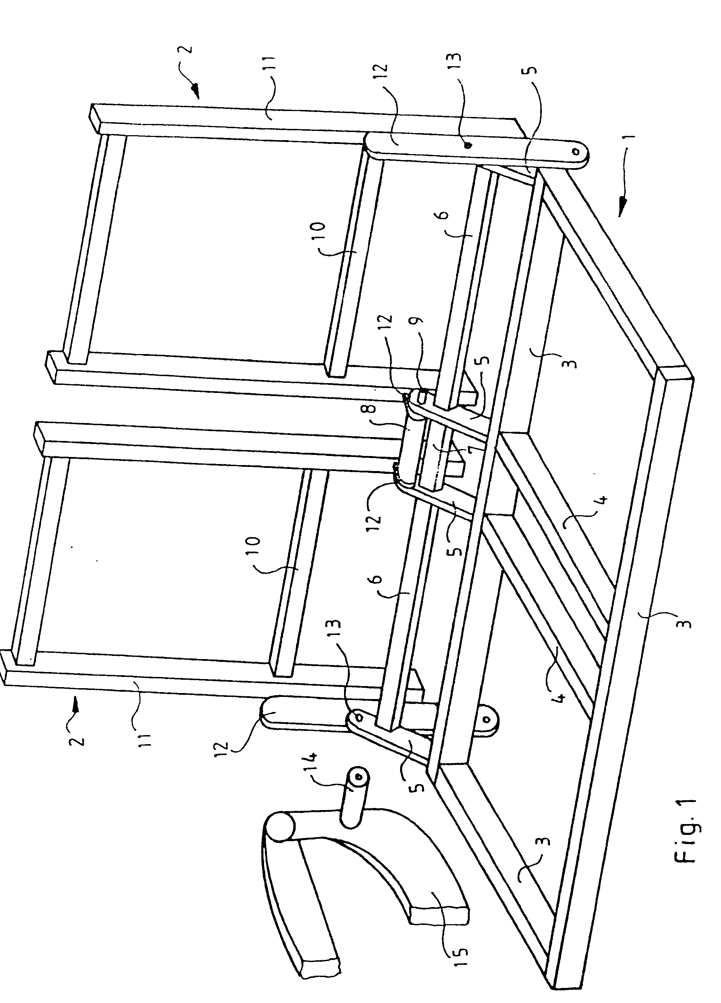

Fig. 1 perspektivisch dessen Aufbau,
Fig. 2 die Seitenansicht und
Fig. 3 eine Rückansicht.

Im wesentlichen besteht der Fahrgastsitz nach der Erfindung aus einem Sitzrahmen 1, an dem Rückenteile 2 angelenkt sind. Der Sitzrahmen 1 wird hierbei gebildet aus hochkant gestellten Rechteckrohren, die zu einem Rahmenrechteck 3 zusammengefügt sind. In dieses Rahmenrechteck 3 sind mittige Querrohre 4 zu seiner Versteifung eingefügt. Am in Sitzrichtung hinteren Rahmenrohr des Rahmenrechtecks 3 sind, in einem Winkel von etwa 045°, nach oben weisende Gelenkträger 5 angebracht, die gegenseitig durch Versteifungsstäbe 6 miteinander verbunden sind. Eine weitere Verbindung dieser Gelenkträger 5 ist sowohl durch einen die inneren Gelenkträger 5 verbindenden Brückensteg 7, wie auch einen Bolzensteg 8, in dem Gelenkbolzen 9 eingeschraubt werden können, gegeben. Dieses hintere Rahmenrohr des Rahmenrechtecks 3 bildet damit, zusammen mit den Gelenkträgern 5 und diese Gelenkträger 5 versteifenden Versteifungsrohren 6, zusammen mit dem Brückensteg 7 und auch dem Bolzensteg 8 einen tragfähigen Tragholm, der, durch seine besondere Anordnung, sowohl in der Lage ist, in der Ebene des Rahmenrechtecks 3 auf den Fahrgastsitz auftreffende Kräfte, wie Kräfte, die senkrecht hierzu auftreffen, aufzunehmen. Verstärkt wird dieser Tragholm noch durch Versteifungsrohre 10, die in Rahmenvierecke 11, die die Rückenteile 2 bilden, eingefügt sind. In der Zeichnung sind diese Versteifungsrohre 10 etwa in Verlängerung der Gelenkträger 5 vorgesehen. Sie können jedoch auch an den Enden der Tragholme, die das Rahmenviereck 11 bilden, vorgesehen sein. Um den nötigen Abstand dieser Versteifungsrohre 10 von den Versteifungsstäben 6 zu erreichen, sind vor den Rahmenvierecken 11 Gelenkstücke 12 vorgesehen, die bei den äusseren Gelenken 13 durch ihre Länge noch mit der Versteifung des Rahmenvierecks 11 beitragen können. Ausserdem können diese verlängerten Gelenkstücke 12 auch noch zum Anlenken einer Gasfeder (nicht eingezeichnet) dienen.

Aus der Zeichnung ist auch noch ersichtlich, dass das Widerlager 14 für das äussere Gelenk 13 gleichzeitig der Befestigungspunkt für einen Armlehnenträger 15 sein kann.

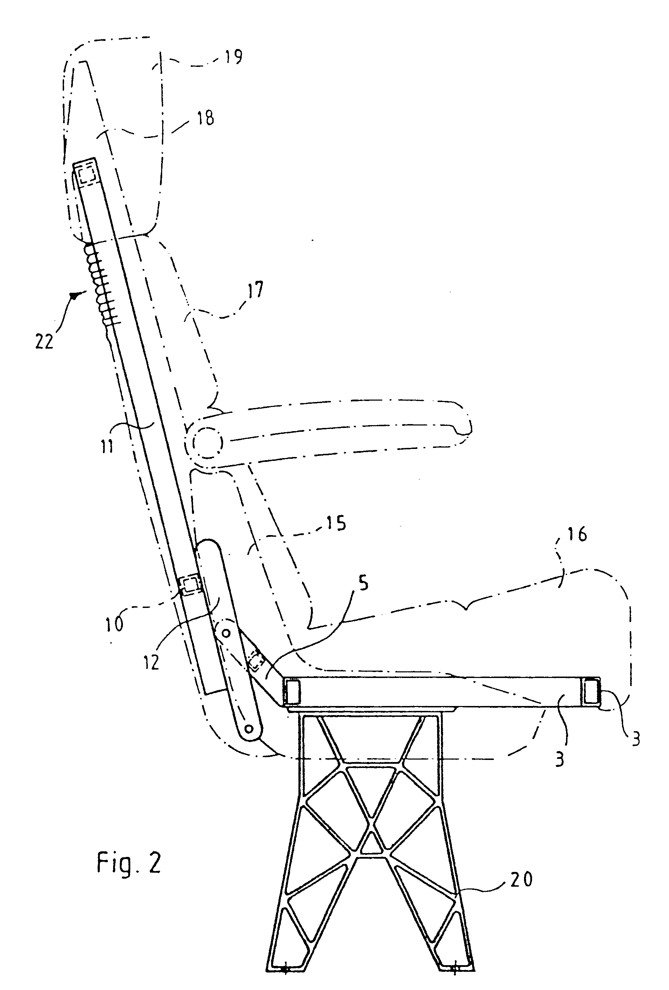

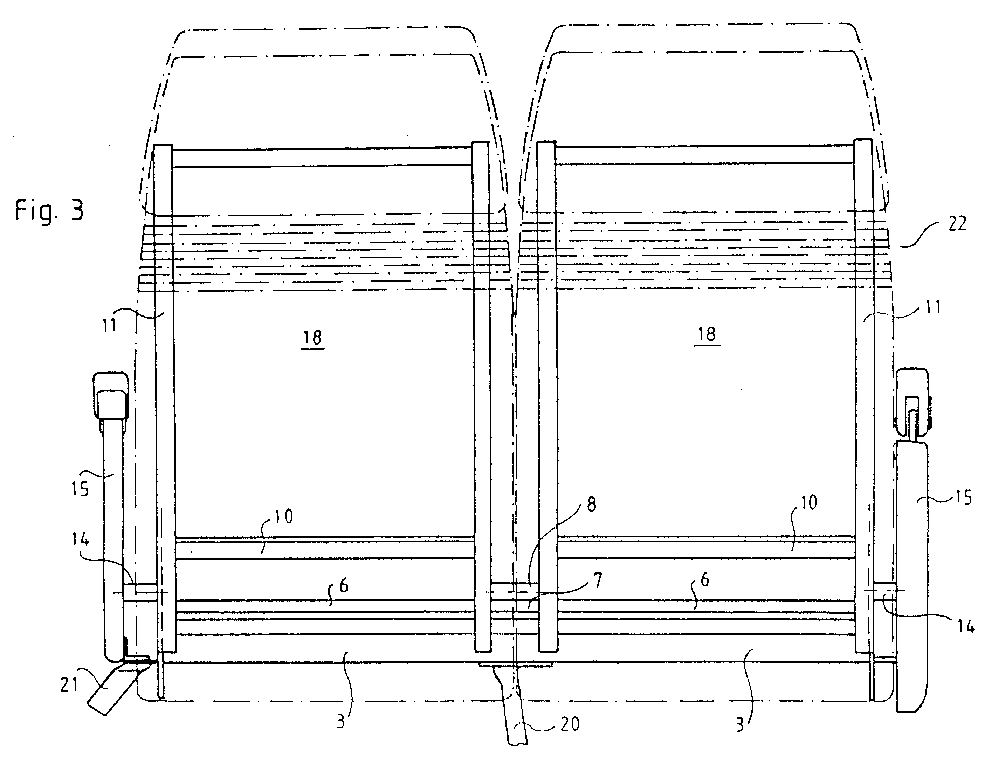

In den Fig. 2 und 3 ist zusätzlich noch die Polsterung 16 des Sitzrahmens 1, wie auch diejenige (17) des Rückenteiles strichpunktiert eingezeichnet; erkennbar ist hieraus auch eine ausgebauchte Kunststoffschale 18, die so über die Höhe des Rückenteiles 2 verlängert ist, dass auf sie eine Kopfstütze 19 aufgesetzt werden kann. An der Unterseite des Rahmenrechtecks 3, an den Querrohren 4 befestigt, ist eine fachwerkartig aufgebaute Untergestellstütze 20 vorgesehen. Die seitliche Befestigung des Fahrgastsitzes erfolgt durch eine Lasche 21, die jeweils an der der Fahrzeugwand zugewandten Seite des Fahrgastsitzes anschraubbar ist.

**Patentansprüche**

1. Doppel-Fahrgastsitz zum Einsatz in Land-, See- und Luftfahrzeugen, gebildet aus einem Sitzrahmen, auf das Sitzpolster aufbringbar sind und an dem aus einem Rahmenviereck mit Polsterauflage bestehende Rückenteile jeweils verschwenkbar angelenkt sind, sowie aus einem den Sitz tragenden Untergestell, dadurch gekennzeichnet, dass der Sitzrahmen (1) ein aus hochkant gestellten Rechteckrohren zusammengefügtes Rahmenrechteck (3) ist, dass an dem in Sitzrichtung hinteren Rahmenrohr in einem Winkel von etwa 045° nach oben weisende Gelenkträger (5), an denen die Rückenteile (2) angelenkt sind, angebracht sind, die über einen Versteifungsstab (6) fest miteinander verbunden sind und dass jeweils in das Rahmenviereck (11) des Rückenteiles (2), im Endbereich der Gelenkträger (5), ein Versteifungsrohr (10) eingefügt ist.

2. Fahrgastsitz nach Anspruch 1, dadurch gekennzeichnet, dass das Versteifungsrohr (10), etwa bis zur Länge der Gelenkträger (5), ober- und/oder unterhalb in das Rahmenviereck eingefügt ist.

3. Fahrgastsitz nach Anspruch 1 oder 2, dadurch gekennzeichnet, dass die inneren Gelenkträger (5) über einen Brückensteg (7) starr miteinander verbunden sind.

4. Fahrgastsitz nach einem oder mehreren der vorhergehenden Ansprüche, dadurch gekennzeichnet, dass die inneren Gelenkträger (5) durch einen zum Einschrauben der Gelenkbolzen (9) bestimmten Bolzensteg (8) starr miteinander verbunden sind.

5. Fahrgastsitz nach einem oder mehreren der vorhergehenden Ansprüche, dadurch gekennzeichnet, dass die Rückenteile (2) über in Sitzrichtung nach vorne weisende Gelenkstücke (12) an den Gelenkträgern (5) angebracht sind.

6. Fahrgastsitz nach Anspruch 5, dadurch gekennzeichnet, dass die Gelenkstücke (12) bis zum Versteifungsrohr (10) im Rahmenviereck (11) reichen.

7. Fahrgastsitz nach einem oder mehreren der vorhergehenden Ansprüche, dadurch gekennzeichnet, dass die Rahmenvierecke (11) der Rückenteile (2) aus in Sitzrichtung hochkant angeordneten Rechteckrohren gebildet sind.

8. Fahrgastsitz nach einem oder mehreren der vorhergehenden Ansprüche, dadurch gekennzeichnet, dass die Rückseite des Rückenteiles (2) durch eine ausgebauchte und mit Versteifungssikken (22) versehene, das Rahmenviereck (11) umfassende Kunststoffschale (18) abgedeckt ist.

9. Fahrgastsitz nach Anspruch 8, dadurch gekennzeichnet, dass die Kunststoffschale (18) oberseitig das Rahmenviereck (11) überragt.

10. Fahrgastsitz nach Anspruch 1, dadurch gekennzeichnet, dass an dem mittigen Querrohr (4) eine Untergestellstütze (20) angebracht ist.

11. Fahrgastsitz nach Anspruch 10, dadurch gekennzeichnet, dass die Untergestellstütze (20) eine Fachwerkkonstruktion ist.

12. Fahrgastsitz nach Anspruch 1, dadurch gekennzeichnet, dass die Gelenkbolzen (9) der äusseren Gelenke (5) jeweils Befestigungspunkte für Armlehnen (Armlehnenträger 5) sind.

**Revendications**

1. Siège double pour passagers destiné à être posé dans les véhicules de transport terrestre, maritime et aérien, et constitué par un cadre de siège sur lequel peuvent être posés des coussins de siège et sur lequel sont à chaque fois articulés en pivotement des éléments de dossier composés d'un cadre rectangulaire muni de supports de coussins, ainsi que par un châssis portant le siège, caractérisé par le fait que le cadre de siège (1) est un cadre rectangulaire (3) composé de tubes à section rectangulaire disposés de chant, que des supports d'articulation (5) qui sont dirigés vers le haut, et sur lesquels sont articulés les éléments de dossier (2), sont montés sous un angle de 45° environ sur le tube de cadre situé en arrière dans la direction du siège et sont reliés fixement entre eux par une tige de raidissement (6), et qu'un tube raidisseur (10) est inséré dans chaque cadre rectangulaire (11) de l'élément de dossier (2), dans la région de l'extrémité du support d'articulation (5).

2. Siège pour passagers selon la revendication 1, caractérisé par le fait que le tube raidisseur (10) est introduit dans le cadre rectangulaire, sensiblement jusqu'à la longueur du support d'articulation (5), au-dessus et/ou au-dessous de lui.

3. Siège pour passagers selon le revendication 1 ou 2, caractérisé par le fait que les supports d'articulation intérieurs (5) sont reliés entre eux rigidement par un pontet (7).

4. Siège pour passagers selon l'une ou plusieurs des revendications précédentes, caractérisé par le fait que les supports d'articulation intérieurs (5) sont reliés entre eux rigidement par un pontet à boulons (8) qui est destiné au vissage des boulons d'articulation (9).

5. Siège pour passagers selon l'une ou plusieurs des revendications précédentes, caractérisé par le fait que les éléments de dossier (2) sont montés sur les supports d'articulation (5) par l'intermédiaire de pièces d'articulation (12) dirigées vers l'avant dans la direction du siège.

6. Siège pour passagers selon la revendication 5, caractérisé par le fait que les pièces d'articulation (12) s'étendent jusqu'au tube raidisseur (10) dans le cadre rectangulaire (11).

7. Siège pour passagers selon l'une ou plusieurs des revendications précédentes, caractérisé par le fait que les cadres rectangulaires (11) des éléments de dossier (2) sont composés de tubes à section rectangulaire disposés de chant dans la direction du siège.

8. Siège pour passagers selon l'une ou plusieurs des revendications précédentes, caractérisé par le fait que le côté arrière de l'élément de siège (2) est recouvert par une coquille bombée en matière plastique (18) qui est munie de moulures de raidissement (22) et qui entoure le cadre rectangulaire (11).

9. Siège pour passagers selon la revendication 8, caractérisé par le fait que la coquille en matière plastique (18) dépasse vers le haut le cadre rectangulaire (11).

10. Siège pour passagers selon la revendication 1, caractérisé par le fait qu'un support de châssis (20) est monté sur le tube transversal central (4).

11. Siège pour passagers selon la revendication 10, caractérisé par le fait que le support de châssis (20) est une construction en treillis.

12. Siège pour passagers selon la revendication 1, caractérisé par le fait que chaque boulon d'articulation (9) des articulations extérieures (5) est un point de fixation pour des accoudoirs (supports d'accoudoirs 5).

**Claims**

1. A double passenger seat for use in land, sea and air vehicles, formed from a seat frame to which seat upholstery portions can be fitted and on which back portions comprising a frame quadrilateral with upholstery support are respectively pivotally mounted, and a supporting frame structure for carrying the seat, characterised in that the seat frame (1) is a frame rectangle (3) which is made up of rectangular tubes which are set on edge, that mounted on the frame tube which is at the rear in the seating direction are hinge carriers (5) which point upwardly at an angle of about 045° and on which the back portions (2) are mounted and which are fixedly connected together by way of a stiffening bar (6) and that a stiffening tube (10) is respectively inserted into each frame quadrilateral (11) of the back portion (2) in the end region of the hinge carriers (5).

2. A passenger seat according to claim 1 characterised in that the stiffening tube (10) is inserted into the frame quadrilateral above and/or below, approximately as far as the length of the hinge carriers (5).

3. A passenger seat according to claim 1 or claim 2 characterised in that the inner hinge carriers (5) are rigidly connected together by way of a bridge limb portion (7).

4. A passenger seat according to one or more of the preceding claims characterised in that the inner hinge carriers (5) are rigidly connected together by a bolt limb portion (8) which is intended for screwing in the hinge bolts (9).

5. A passenger seat according to one or more of the preceding claims characterised in that back portions (2) are mounted on the hinge carriers (5) by way of hinge portions (12) which face forwardly in the seating direction.

6. A passenger seat according to claim 5 characterised in that the hinge portions (12) extend as far as the stiffening tube (10) in the frame quadrilateral (11).

7. A passenger seat according to one or more of the preceding claims characterised in that the frame quadrilaterals (11) of the back portions (2) are formed from rectangular tubes which are arranged on edge in the seating direction.

8. A passenger seat according to one or more of the preceding claims characterised in that the back side of the back portion (2) is covered by an outwardly bulged plastics shell (18) which is provided with stiffening beads (22) and which embraces the frame quadrilateral (11).

9. A passenger seat according to claim 8 characterised in that the plastics shell (18) projects beyond the frame quadrilateral (11) at the top thereof.

10. A passenger seat according to claim 1 characterised in that a supporting frame structure pillar (20) is mounted to the central transverse tube (4).

11. A passenger seat according to claim 10 characterised in that the supporting frame structure pillar (20) is a lattice work construction.

12. A passenger seat according to claim 1 characterised in that the hinge pins (9) of the outer hinges (5) are each fixing points for armrests (armrest carriers 5).

Fig. 1

Fig. 2

Fig. 3